# DEMANDE DE BREVET EUROPEEN

(11) **EP 1 089 402 A1**
(43) Date de publication de la demande: **04.04.2001**
(21) Numéro de dépôt: 00402425.3
(22) Date de dépôt: 04.09.2000
(51) Int. Cl.: H01S 3/067, H04B 10/17

(54) **Amplificateur optique à fibre optique**

(30) Priorité: 24.09.1999 FR 9911981
(71) Demandeur: ALCATEL, 75008 Paris (FR)
(72) Inventeur: Desthieux, Bertrand, 75015 Paris (FR)
(74) Mandataire: Lamoureux, Bernard

(57) **Abrégé**

Amplificateur à fibre optique comprenant une fibre optique dopée composée d'un coeur monomode dopé, d'une gaine interne multimode et d'une gaine externe, et un moyen de pompage optique multimode couplé optiquement à la gaine interne, caractérisé en ce que ledit amplificateur comprend en outre un moyen de pompage optique monomode couplé optiquement au coeur de la fibre optique.

Application aux systèmes de transmission WDM par fibre optique.

## Description

La présente invention concerne le domaine de la transmission de signaux optiques sur fibre optique, et plus particulièrement un amplificateur optique à fibre dopée pour l'amplification de tels signaux.

Dans les systèmes de transmission par fibre optique de grande longueur, notamment mais pas exclusivement les systèmes de transmission transocéaniques, il est nécessaire de ré-amplifier périodiquement les signaux optiques transmis sur les fibres optiques du câble pour compenser l'atténuation des signaux. Des amplificateurs sont ainsi prévus régulièrement le long du câble, typiquement tous les 50 à 100 km.

L'émergence des systèmes de transmission à multiplexage en longueur d'onde (en terminologie anglo-saxonne "WDM", pour "Wavelength Division Multiplexing") implique l'utilisation d'amplificateurs de plus en plus puissants, c'est-à-dire de pompes optiques de plus en plus puissantes, aptes à amplifier un grand nombre de canaux.

Un moyen de pompage monomode injectant un signal dans le coeur dopé de la fibre ne permet pas d'atteindre les puissances nécessaires à de telles applications.

L'injection d'une puissance de pompe importante pourrait évidemment être réalisée par un nombre important de pompes optiques monomodes. Cependant, on comprend qu'une telle solution ne présente pas d'intérêt pratique, en raison de son coût et de son encombrement.

Il a été proposé de surmonter cette limitation par l'utilisation de moyens de pompage multimode.

De tels moyens de pompage offrent une puissance élevée. Cependant, un problème important pour ce type d'amplificateurs est le bruit qui peut être créé par l'injection d'un signal de pompage peu intense dans coeur de la fibre optique dopée.

EP-A-0 723 714 décrit un amplificateur optique à fibre optique comprenant une fibre optique dopée composée d'un coeur monomode dopé, d'une gaine interne multimode et d'une gaine externe, et un moyen de pompage optique multimode couplé optiquement à la gaine interne. Le coeur de cette fibre amplificatrice est dopée en erbium et ytterbium. L'ytterbium présente l'avantage de présenter un pic d'absorption très élevé à 980 nm (longueur d'onde du signal de pompage utilisé dans cet amplificateur), mais impose que la fibre soit en silice phosphorée, ce qui est pénalisant car l'utilisation de phosphore a pour conséquence une largeur de bande d'amplification réduite, par rapport à une fibre codopée erbium-aluminium standard.

Une autre solution consiste à amplifier les signaux par effet Raman. Toutefois, dans ce cas, la pompe optique est relativement complexe, ce qui obère son utilisation dans les applications où la fiabilité est un critère déterminant, tels que les transmission transocéaniques.

L'invention propose un amplificateur optique à fibre dopée présentant une puissance élevée et un niveau de bruit faible.

De manière plus précise l'invention a pour objet un amplificateur à fibre optique comprenant une fibre optique dopée composée d'un coeur monomode dopé, d'une gaine interne multimode et d'une gaine externe, et un moyen de pompage optique multimode couplé optiquement à la gaine interne, caractérisé en ce que ledit amplificateur comprend en outre un moyen de pompage optique monomode couplé optiquement au coeur de la fibre optique.

De manière préférée, le dopant du coeur est l'erbium et les moyens de pompage optique sont des diodes laser.

Dans un mode de réalisation préféré, la puissance du premier moyen de pompage multimode est supérieure à la puissance du second moyen de pompage monomode.

En particulier, le rapport des puissances des moyens de pompage est supérieur ou égal à 10.

L'invention a également pour objet un système de transmission optique comprenant un cable à fibre optique et deux stations terminales, et au moins un amplificateur optique selon l'invention.

D'autres caractéristiques et avantages de l'invention apparaîtront mieux à la lecture de la description qui suit, donnée à titre illustratif mais non limitatif, de modes de réalisation de l'invention, en référence aux dessins annexés, sur lesquels :
- la figure 1 représente un système de transmission optique comportant au moins un amplificateur optique selon l'invention, et
- la figure 2 représente une coupe transversale de la fibre optique dopée de l'amplificateur.

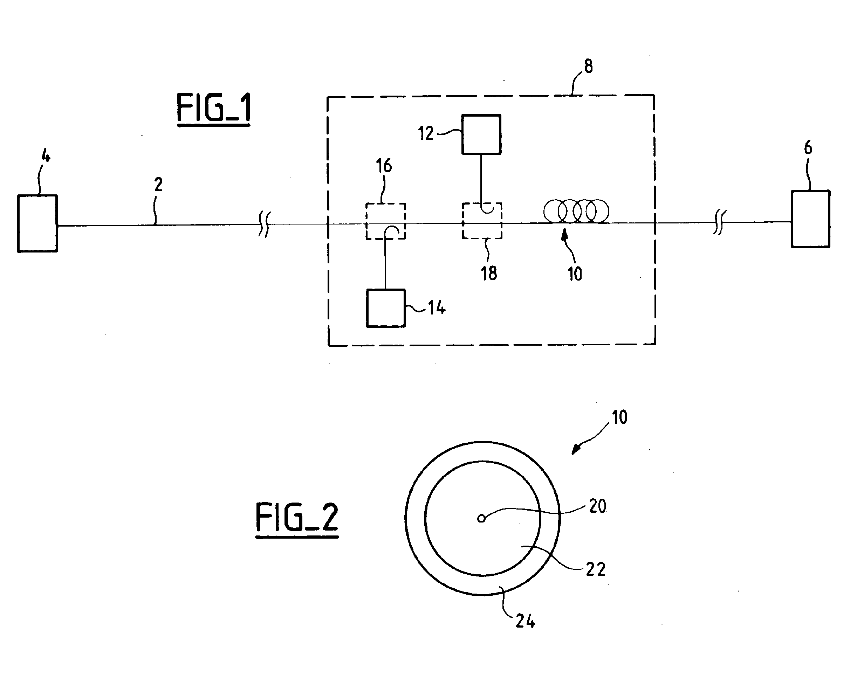

Le système de transmission optique représenté sur la figure 1 comprend un câble à fibres optiques 2, et deux stations terminales 4, 6 reliées entre elles par le câble 2. Pour chaque fibre optique du câble, au moins un amplificateur 8 est prévu pour amplifier les signaux optiques transmis sur cette fibre. En pratique, des amplificateurs sont disposés à intervalles réguliers le long du câble. La distance entre amplificateurs successifs dépend des spécificités du système de transmission (longueur totale du câble, nature des fibres optiques, ...); elle est de l'ordre de 50 à 100 km ou plus.

L'amplificateur comprend, conformément à l'invention, une fibre optique dopée 10 et deux moyens de pompage optique 12, 14 dont les signaux de pompage sont injectés dans la fibre optique 10 par l'intermédiaire de coupleurs optiques respectifs 16, 18.

La fibre optique dopée 10 est une fibre à double gaine. Sa coupe transversale est représentée sur la figure 2. Elle comprend un coeur dopé 20, le dopant prinicipal étant choisi (Er, Nd, ...) pour permettre une amplification d'un signal de ligne se propageant dans le coeur, une gaine interne 22, et une gaine externe 24 destinée à confiner le signal de pompage injecté dans la gaine interne 22. D'autres dopants, utilisés classiquement par l'homme du métier, qui permettent d'ajuster la courbe de gain de l'amplificateur ou l'indice de réfraction, tels que AI et/ou Ge, peuvent être également présents dans le coeur. Les diamètres du coeur et de la gaine interne sont par exemple égaux resoectivement à 6 et 50 µm. L'invention n'est cependant pas limitée à un type de fibre dopée particulier. Notamment, les fibres optiques à grande surface effective, c'est-à-dire ayant un diamètre de gaine interne de 80 µm ou plus, peuvent être avantageusement utilisées, car elles permettent l'injection d'une plus grande puissance de pompage.

Le moyen de pompage 12 est multimode. Il injecte un signal de pompage de forte puissance dans la gaine interne de la fibre dopée 10. Ce signal est absorbé par le dopant du coeur lorsqu'il le traverse. Un coupleur 18 multimode/monomode adapté à l'injection du signal de pompage du moyen 12 est décrit notamment dans EP-A-0 801 827.

Selon l'invention, un deuxième moyen de pompage 14, de type monomode, est prévu. Ce moyen de pompage injecte un signal de pompage dans le coeur 20 de la fibre dopée par exemple par l'intermédiaire d'un coupleur monomode dichroïque. Ce moyen de pompage monomode à pour effet d'augmenter l'inversion de population en début de la fibre dopée, et par suite de réduire le niveau de bruit sur la ligne de transmission. La solution proposée présente un avantage important par rapport à la solution décrite dans le document EP-A-0 723 714, citée plus haut, qui vise également à offrir un gain élevé et un niveau de bruit faible, car elle offre une bande de gain plus large et est donc mieux adaptée aux systèmes WDM.

Pour évaluer l'effet sur le niveau de bruit de l'adjonction du moyen de pompage monomode 14, on a mesuré le niveau de bruit d'un amplificateur selon la figure 1 mais dépourvu du moyen de pompage monomode 14. On considère donc un moyen de pompage multimode de 3 W à 1480 nm, une fibre dopée Er (coeur de 6 µm de diamètre; gaine interne de 42 µm de diamètre) ayant un taux d'absorption de 3,3 dB/m et une longueur de 100 m, et un signal d'entrée à amplifier ayant une puissance de 0 dBm à 1550 nm. Avec un tel moyen amplificateur, le signal de sortie a une puissance de 27 dBm et le niveau de bruit est de 5 dB.

Dans le cas où l'on adjoint à cet amplificateur un moyen de pompage monomode de 100 mW à 1480 nm, on obtient un niveau de bruit de 4,5 dB, soit une réduction de 10 % du bruit.

Enfin, si on utilise un moyen de pompage monomode de 100 mW à 980 nm au lieu d'un moyen de pompage monomode de 100 mW à 1480 nm, le niveau de bruit n'est plus que de 3,7 dB.

Bien entendu, la présente invention n'est pas limitée aux exemples et modes de réalisation décrits et représentés, mais elle est susceptible de nombreuses variantes à la portée de l'homme du métier. En particulier, d'autres puissances de pompage sont envisageables, le point important étant que la puissance du moyen de pompage monomode soit suffisante pour augmenter sensiblement le degré d'inversion de population en début de la fibre dopée. Par ailleurs, l'amplificateur décrit n'est pas limité à l'amplification des signaux à 1550 nm, mais convient également par exemple à l'amplification des signaux à 1600 nm.

## Revendications

1. Amplificateur à fibre optique comprenant une fibre optique dopée composée d'un coeur monomode dopé, d'une gaine interne multimode et d'une gaine externe, et un moyen de pompage optique multimode couplé optiquement à la gaine interne, caractérisé en ce que ledit amplificateur comprend en outre un moyen de pompage optique monomode couplé optiquement au coeur de la fibre optique.

2. Amplificateur selon la revendication 1, dans lequel le dopant du coeur est Er.

3. Amplificateur selon l'une des revendications 1 et 2, dans lequel les moyens de pompage optique sont des diodes laser.

4. Amplificateur selon l'une quelconque des revendications 1 à 3, dans lequel la puissance du premier moyen de pompage multimode est supérieure à la puissance du second moyen de pompage.

5. Amplificateur selon la revendication 4, dans lequel le rapport des puissances des moyens de pompage est supérieur ou égal à 10.

6. Système de transmission optique comprenant un cable à fibre optique et deux stations terminales, caractérisé en ce qu'il comprend au moins un amplificateur optique selon l'une des revendications 1 à 5.
